# EUROPEAN PATENT SPECIFICATION

(11) **EP 3 435 703 B1**
(45) Date of publication and mention of the grant of the patent: **07.06.2023**
(21) Application number: 17769830.5
(22) Date of filing: 28.02.2017
(51) Int. Cl.: H04L 5/00, H04W 24/10, H04W 28/16, H04W 72/54, H04W 92/12, H04W 88/08

(54) **WIRELESS BASE STATION, REMOTE DEVICE AND COMMUNICATION CONTROL METHOD**
DRAHTLOSBASISSTATION, ENTFERNTE VORRICHTUNG UND KOMMUNIKATIONSSTEUERUNGSVERFAHREN
STATION DE BASE SANS FIL, DISPOSITIF REMOTE ET PROCÉDÉ DE COMMANDE DE COMMUNICATION

(30) Priority: 24.03.2016 JP 2016060191
(43) Date of publication of application: 30.01.2019
(73) Proprietor: NTT DOCOMO, INC., Chiyoda-ku Tokyo 100-6150 (JP)
(72) Inventor: OOKUBO Naoto, Tokyo 100-6150 (JP); KIYOSHIMA Kohei, Tokyo 100-6150 (JP); UMESH Anil, Tokyo 100-6150 (JP); UCHINO Tooru, Tokyo 100-6150 (JP); TAKEDA Kazuki, Tokyo 100-6150 (JP)
(74) Representative: Hoffmann Eitle
(86) International application number: PCT/JP2017/007780
(87) International publication number: WO 2017/163785

(56) References cited:
- WO-A1-2015/001844
- WO-A1-2015/001844
- WO-A1-2016/002166
- WO-A1-2016/002166
- CN-A- 103 532 884
- US-A1- 2008 253 318
- US-A1- 2011 287 791
- US-A1- 2012 127 934
- US-A1- 2012 263 068
- US-A1- 2014 211 731
- US-A1- 2015 230 252

## Description

### TECHNICAL FIELD

The present invention relates to a radio base station including a remote device and a central aggregation device and that performs radio communication with a user device, and to a remote device and a communication control method.

### BACKGROUND ART

3rd Generation Partnership Project (3GPP) specifies, with the aim of further speeding Long Term Evolution (LTE), LTE-Advanced (hereinbelow, the LTE includes the LTE-Advanced) . Moreover, in the 3GPP, specification of succeeding systems of the LTE called 5G (5th generation mobile communication system) and the like is being considered.

So-called C-RAN radio base station including a central aggregation device having a scheduler function (MAC scheduler) in MAC layer, and the like and a remote device arranged at a remote installation site from the central aggregation device is used in the LTE. The remote device includes a radio unit (RF unit) such as PA (Power Amplifier) / LNA (Low Noise Amplifier), a radio transmission - reception module, and a modulation - demodulation module.

The central aggregation device and the remote device are connected to each other via a wired transmission path called a front-haul. For example, Common Public Radio Interface (CPRI) is known as an interface between the central aggregation device and the remote device.

On the occasion of consideration of the specification of the 5G, it is proposed (for example, see Non-Patent Document 1) to mount the function of a radio physical layer (layer 1) in the remote device that used to be mounted in the central aggregation device until now. When the function of the radio physical layer is mounted in the remote device, required transmission band for the front-haul can be reduced.

### PRIOR ART DOCUMENT

### NON-PATENT DOCUMENT

[Non-Patent Document 1]: 3GPP RWS-150051(3GPP RAN workshop on 5G), "5G Vision for 2020 and Beyond," 3GPP, September, 2015

WO 2016/002166 A1 relates to a wireless communication system obtained by separating the functions of a wireless base station into a wireless control device and a wireless device.

CN 103 532 884 A discloses an uplink interference suppression technology in a C-RAN architecture radio access network.

US2011/0287791 A1 discloses a wireless communication system e.g. orthogonal frequency division multiple access system, which has base stations that refer to antenna selection results transmitted from terminal to assign antennas belonging to different cells to terminal.

### SUMMARY OF THE INVENTION

The scope of invention is defined by the appended claims. Further embodiments of the invention are defined by the dependent claims. The embodiments which do not fall within the scope of the appended set of claims are to be interpreted as example embodiments or background information, useful only for understanding the invention.

As mentioned above, the following issues arise when the function of the radio physical layer, which used to be mounted in the central aggregation device until now, is mounted in the remote device. That is, the function of an upper layer (layer 2, and the like) such as the MAC scheduler is mounted in the central aggregation device in the same manner as before.

Therefore, for example, to implement appropriate assignment of a radio resource to a user device (also called a radio communication terminal or a mobile station), it is necessary to appropriately feedback downlink quality information, which is information indicating radio communication quality of the downlink, from the remote device to the central aggregation device.

Specifically, the following can be listed as the downlink quality information: channel quality information (CQI: Channel Quality Indicator) that indicates a reception quality of the channel in the downlink that is acquired by the user device, a precoding weight index (PMI: Precoding Matrix Indicator) used for precoding in which a different transmission antenna weight is multiplied per transmission layer (stream) when transmitting in a downlink shared physical channel (PDSCH: Physical Downlink Shared Channel), and optimum rank information (RI: Rank Indicator) of the number of the transmission layers (rank) of MIMO (Multiple Input Multiple Output).

However, if the function of the upper layer such as the MAC scheduler is mounted in the central aggregation device in the same manner as before and the function of the radio physical layer is mounted separately in the remote device, the cooperation between the radio physical layer and the upper layer of the radio physical layer becomes difficult.

The present invention has been made in view of the above discussion. One object of the present invention is to provide a radio base station, a remote device, and a communication control method that can realize appropriate assignment of a radio resource to a user device even when the function of the upper layer such as the MAC scheduler and the function of the radio physical layer are mounted separately.

According to one aspect of the present invention, in a radio base station including a remote device and a central aggregation device and that performs radio communication with a user device, the remote device includes a quality information acquiring unit that acquires via a predetermined uplink channel downlink quality information indicating radio communication quality in downlink acquired by the user device; and a quality information transmitting unit that transmits to the central aggregation device a quality data series containing one or more pieces of the downlink quality information acquired by the quality information acquiring unit, and the central aggregation device includes an information receiving unit that receives the quality data series; and a radio resource assigning unit that performs assignment of a radio resource to the user device based on the quality data series received by the information receiving unit.

According to another aspect of the present invention, a remote device included in a radio base station that performs radio communication with a user device, and connectable to a central aggregation device includes a quality information acquiring unit that acquires via a predetermined uplink channel downlink quality information indicating radio communication quality in downlink acquired by the user device; and a quality information transmitting unit that transmits to the central aggregation device a quality data series containing one or more pieces of the downlink quality information acquired by the quality information acquiring unit.

According to still another aspect of the present invention, a communication control method implemented in a radio base station including a remote device and a central aggregation device and that performs radio communication with a user device includes acquiring including the remote device acquiring via a predetermined uplink channel downlink quality information indicating radio communication quality in downlink acquired by the user device; transmitting including the remote device transmitting to the central aggregation device a quality data series containing one or more pieces of the downlink quality information acquired at the acquiring; and performing including the central aggregation device performing assignment of a radio resource to the user device based on the quality data series.

### BRIEF DESCRIPTION OF THE DRAWINGS

FIG. 1 is an overall structural diagram of a radio communication system 10.
FIG. 2 is an overall block diagram of the radio communication system 10.
FIG. 3 is a functional block diagram of a central aggregation device 210.
FIG. 4 is a functional block diagram of a remote device 260.
FIGS. 5(a) and 5(b) are conceptual diagrams of CQI acquiring operation performed by the central aggregation device 210, the remote device 260, and a user device 300.
FIG. 6 depicts a reception sequence of CQI by PUSCH.
FIG. 7 depicts an example of a format of a quality data series.
FIGS. 8(a) and 8(b) depict concrete configuration examples of a quality data series QD.

### MODES FOR CARRYING OUT THE INVENTION

Exemplary embodiments are explained below with reference to the accompanying drawings. In the drawings, structural elements having the same function or configuration are indicated by the same or similar reference numerals and the explanation thereof is appropriately omitted.

### (1) Overall structural configuration of radio communication system

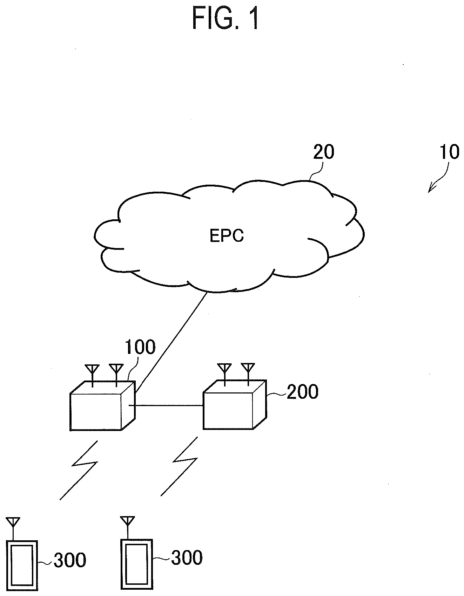

FIG. 1 is an overall structural diagram of a radio communication system 10 according to the present embodiment. The radio communication system 10 is a radio communication system in accordance with Long Term Evolution (LTE), and 5G which is a succeeding system of the LTE.

In the present embodiment, the LTE (including LTE-Advanced) will be appropriately called "4G" to show the correspondence thereof with the 5G. Moreover, in the present embodiment, a radio communication system havinga configuration that is right after the 5G was introduced is assumed, and LTE assisted operation in which the 5G assists the 4G is realized.

The radio communication system 10 includes a core network 20, a radio base station 100, a radio base station 200, and one or more user devices (user equipment)300.

The core network 20 is also called Evolved Packet Core (EPC) and is constituted by a mobility management entity (MME), a serving gateway (S-GW), PDN gateway (P-GW), and the like.

The radio base station 100 is a radio base station in accordance with the 4G and is also called eNodeB. The radio base station 100 is connected to a device (node) constituting the core network 20 via S1-MME or S1-U interface.

The radio base station 200 is a radio base station in accordance with the 5G. The radio base station 200 is connected to the radio base station 100 via X2 interface (below conveniently refers to as X2-AP', X2-U').

The user device 300 can perform radio communication with the radio base station 100 and the radio base station 200. The user device 300 may be called a radio communication terminal or a mobile station. The radio base station 200 and the user device 300 can be caused to support, by controlling a radio signal transmitted by a plurality of antenna elements, Massive MIMO that generates a beam having higher directivity, carrier aggregation (CA) that uses a plurality of component carriers (CC), dual connectivity (DC) in which a component carrier is transmitted at the same time between a plurality of radio base stations and the user device 300, and the like.

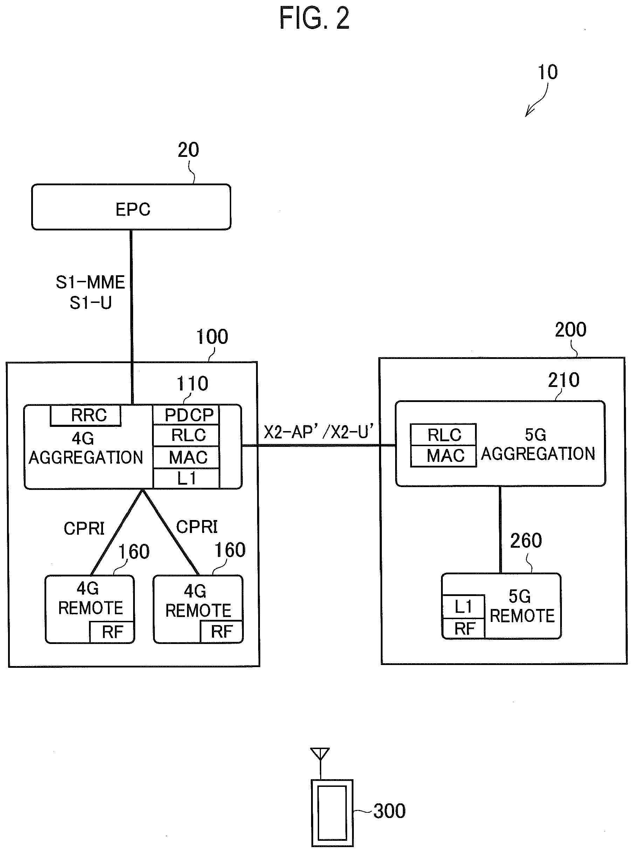

FIG. 2 is an overall block diagram of the radio communication system 10. As shown in FIG. 2, the radio base station 100 includes a central aggregation device 110 and one or more remote devices 160. The radio base station 200 includes a central aggregation device 210 and a remote device 260. It is allowable that each of the radio base station 100 and the radio base station 200 includes some device other than the central aggregation device and the remote device.

The central aggregation device 110 includes a radio physical layer (L1), a medium access control layer (MAC), a radio link control layer (RLC), and a packet data convergence protocol layer (PDCP). Moreover, the central aggregation device 110 includes a radio resource control layer (RRC) as an upper layer of the PDCP.

The remote device 160 can be installed at a site that is remote from the central aggregation device 110. The remote device 160 includes a radio unit (RF unit) such as the PA (Power Amplifier) / LNA (Low Noise Amplifier), a radio transmission - reception module, and a modulation - demodulation module.

The central aggregation device 110 is also called a digital processing unit (Digital Unit (DU)), and the remote device 160 is also called a radio processing unit (Radio Unit (RU)). The central aggregation device 110 and the remote device 160 are connected to each other via a wired transmission path called a front-haul. For example, the Common Public Radio Interface (CPRI) is used as an interface between the central aggregation device 110 and the remote device 160.

Although the central aggregation device 210 and the remote device 260 respectively correspond to the central aggregation device 110 and the remote device 160, the layer configurations thereof are different.

Specifically, the central aggregation device 210 includes the medium access control layer (MAC) and the radio link control layer (RLC). The remote device 260 includes the radio physical layer (L1) and the radio unit (RF).

As described above, the central aggregation device 210 is connected to the central aggregation device 110 via X2-AP', X2-U' interface.

### (2) Functional block configuration of radio communication system

A functional block configuration of the radio communication system 10 is explained below. Specifically, functional block configurations of the central aggregation device 210 and the remote device 260 are explained.

### (2.1) Central aggregation device 210

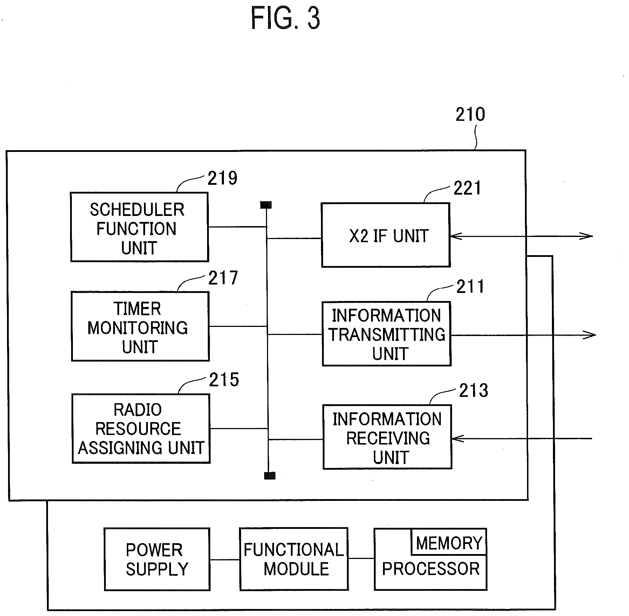

FIG. 3 is a functional block diagram of the central aggregation device 210. As shown in FIG. 3, the central aggregation device 210 includes an information transmitting unit 211, an information receiving unit 213, a radio resource assigning unit 215, a timer monitoring unit 217, a scheduler function unit 219, and X2 IF unit 221.

As shown in FIG. 3, each functional block of the central aggregation device 210 is implemented by hardware elements such as a processor (including a memory), a functional module (external connection IF and the like) and a power supply.

The information transmitting unit 211 transmits scheduling information and the like including UL Scheduling Grant and the like to the remote device 260.

Moreover, when the user device 300 performs carrier aggregation (CA) with a plurality of the remote devices 260 by using a plurality of component carriers (CC), the information transmitting unit 211 transmits scheduling information of the downlink in other remote devices 260 to the remote devices 260 connected to the central aggregation device 210. In the present embodiment, the information transmitting unit 211 constitutes a scheduling information transmitting unit.

Specifically, when the user device 300 performs the CA in which a plurality of the CCs is simultaneously transmitted to different remote devices 260, the information transmitting unit 211 transmits to other remote devices 260 the scheduling information of the radio resource to the user device 300 in the downlink of a particular remote device 260. Accordingly, the scheduling information of the downlink can be shared among a plurality of the remote devices 260 connected to the central aggregation device 210.

The information receiving unit 213 receives the information from the remote device 260. Particularly, in the present embodiment, the information receiving unit 213 receives channel quality information, specifically, a quality data series that contains downlink quality information such as the CQI (Channel Quality Indicator).

The downlink quality information includes the CQI, the PMI (Precoding Matrix Indicator), and the RI (Rank Indicator). The CQI is an indicator that indicates the reception quality of the channel in the downlink acquired by the user device 300. The PMI is a precoding weight index used for precoding in which a different transmission antenna weight is multiplied per transmission layer (stream) when transmitting in a downlink shared physical channel (PDSCH: Physical Downlink Shared Channel). The RI is optimum rank information of the number of the transmission layers (rank) of the MIMO (Multiple Input Multiple Output).

A format of the quality data series will be explained later. The quality data series contains a user-device identifier for identifying the user device 300 and the downlink quality information.

The radio resource assigning unit 215 performs assignment of the radio resource to the user device 300 based on the quality data series received by the information receiving unit 213. Specifically, the radio resource assigning unit 215 assigns the radio resource in the downlink (PDSCH) based on the contents of the downlink quality information (CQI/PMI/RI) included in the quality data series according to a scheduler process performed by the scheduler function unit 219.

More specifically, the radio resource assigning unit 215 determines the number of resource blocks (RB) to be assigned to the user device 300, a transport block size (TBS), a modulation method, and the like.

Moreover, when it is confirmed by the timer monitoring unit 217 that TA timer is within a period of operation, the radio resource assigning unit 215 performs assignment of the radio resource to the user device 300 based on the quality data series. That is, the radio resource assigning unit 215 does not perform the assignment of the radio resource to the user device 300 when the TA timer is not within a period of operation.

The timer monitoring unit 217 monitors an operating state of the timer that measures a period during which the user device 300 transmits the downlink quality information (CQI/PMI/RI). Specifically, the timer monitoring unit 217 monitors a state of Time Alignment timer (TA timer) of the user device 300.

The user device 300 releases the radio resource for the PUCCH when the TA timer expires and stops sending the downlink quality information. The timer monitoring unit 217 monitors that the TA timer is operating, that is, the TA timer has not expired.

Specifically, because the user device 300 restarts the TA timer each time Timing Advance (TA) command is received from the radio base station 200, the timer monitoring unit 217 monitors the state of the TA timer by restarting monitoring time, like the TA timer of the user device 300, each time ACK to the PDSCH to which the TA command was transmitted is received from the user device 300.

Moreover, upon detecting that the TA timer has expired, the timer monitoring unit 217 notifies the remote device 260 connected to the central aggregation device 210 of the fact that the TA timer of the user device 300 has expired.

The scheduler function unit 219 performs scheduling (assignment) of the radio resource to the user device 300 based on statuses of the user devices 300 connected to the radio base station 200, a request from each of the user devices 300, and the like.

The X2 IF unit 221 provides an interface for realizing communication with the central aggregation device 110. Specifically, the X2 IF unit 221 is an interface that directly connects the central aggregation device 110 and the central aggregation device 210 by using the MAC and the RLC. It is preferable that the X2 IF unit 221 is an existing open interface. Data transmitted and received by the user device 300 is relayed to the radio base station 100 via the X2 IF unit 221.

### (2.2) Remote device 260

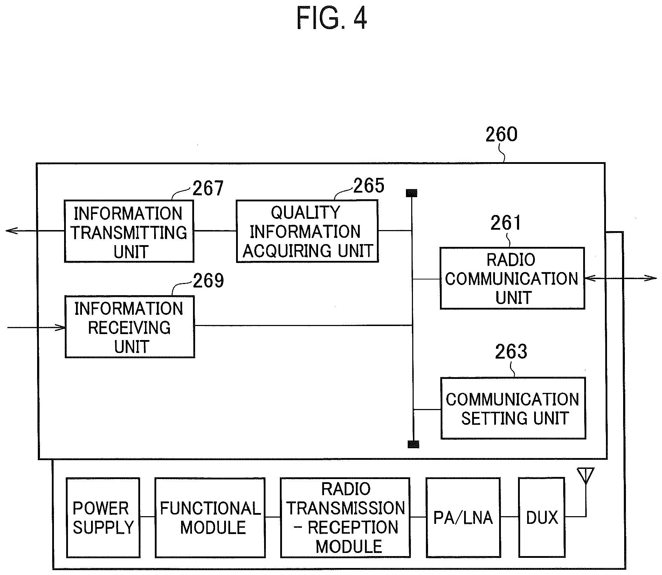

FIG. 4 is a functional block diagram of the remote device 260. As shown in FIG. 4, the remote device 260 includes a radio communication unit 261, a communication setting unit 263, a quality information acquiring unit 265, an information transmitting unit 267, and an information receiving unit 269.

As shown in FIG. 4, each functional block of the remote device 260 is implemented by hardware elements such as a duplexer, the PA (Power Amplifier) / LNA (Low Noise Amplifier), a radio transmission - reception module (RF conversion), a functional module (quadrature modulation and demodulation and the like) and a power supply.

The radio communication unit 261 performs radio communication with the user device 300. Specifically, the radio communication unit 261 performs the radio communication with the user device 300 according to the specification of the 5G. As mentioned earlier, the radio communication unit 261 can support the Massive MIMO, the carrier aggregation (CA), the dual connectivity (DC), and the like.

The communication setting unit 263 sets information (for example, frequency, bandwidth, cell ID, and the like) required to receive an uplink signal transmitted by the user device 300 beforehand, i.e., prior to performing the radio communication with the user device 300.

The quality information acquiring unit 265 acquires via a predetermined uplink channel the downlink quality information (CQI/PMI/RI) acquired by the user device 300. Specifically, when an uplink shared physical channel (PUSCH (Physical Uplink Shared Channel)) has been assigned to the user device 300, the quality information acquiring unit 265 acquires the downlink quality information via the PUSCH.

When the PUSCH has not been assigned to the user device 300, the quality information acquiring unit 265 acquires the downlink quality information via an uplink control physical channel (PUCCH (Physical Uplink Control Channel)).

Moreover, when it is notified from the central aggregation device 210 that the TA timer of the user device 300 has expired, the quality information acquiring unit 265 stops acquiring of the downlink quality information from the user device 300. Specifically, the quality information acquiring unit 265 stops reception and a monitoring of the downlink quality information from the user device 300.

The information transmitting unit 267 transmits the downlink quality information acquired by the quality information acquiring unit 265 to the central aggregation device 210.

Moreover, the information transmitting unit 267 transmits a quality data series containing one or more pieces of the downlink quality information acquired by the quality information acquiring unit 265 to the central aggregation device 210. In the present embodiment, the information transmitting unit 267 constitutes a quality information transmitting unit.

As mentioned earlier, the information transmitting unit 267 transmits a quality data series containing a user-device identifier for identifying the user device 300 and the downlink quality information. Moreover, it is allowable for the information transmitting unit 267 to transmit a quality data series containing the uplink channel, specifically, a channel position indicating a position in the PUCCH or the PUSCH, to which the user device 300 transmitted the downlink quality information.

The information receiving unit 269 receives the information transmitted from the central aggregation device 210. Specifically, the information receiving unit 269 receives the scheduling information and the like transmitted from the central aggregation device 210.

### (3) Operation of radio communication system

An operation of the radio communication system 10 is explained below. Specifically, an operation performed by the central aggregation device 210 and the remote device 260 for acquiring the downlink quality information (CQI/PMI/RI) is explained. An explanation is given below by taking the CQI as an example; however, the same explanation holds true for the PMI and the RI.

### (3.1) Outline of operation

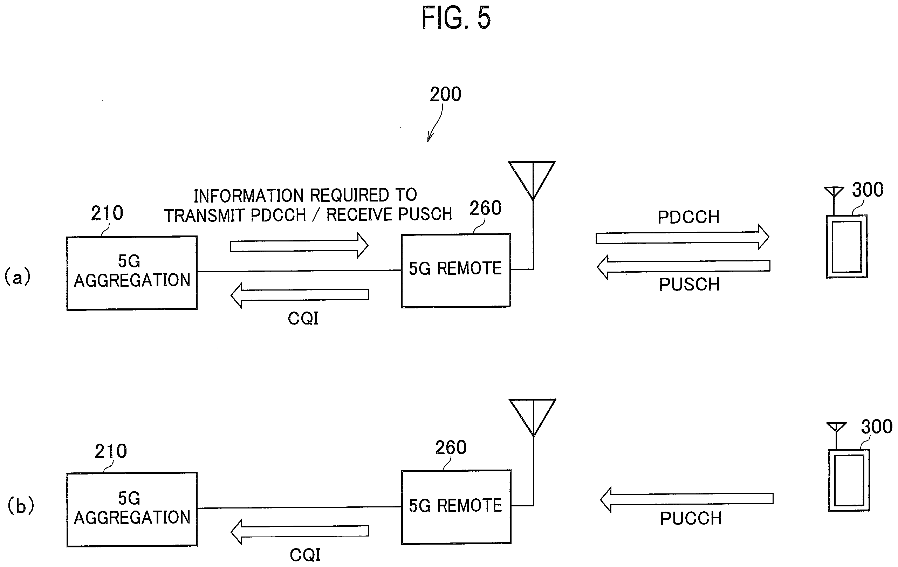

FIGS. 5(a) and 5(b) are conceptual diagrams of CQI acquiring operation performed by the central aggregation device 210, the remote device 260, and the user device 300. Specifically, FIG. 5(a) depicts an outline of an operation of transmission and reception of the CQI by the PUSCH. FIG. 5(b) depicts an outline of an operation of transmission and reception of the CQI by the PUCCH.

As shown in FIGS. 5(a) and 5(b), the CQI is transmitted by an uplink channel of either of the PUSCH and the PUCCH.

As shown in FIG. 5(a), if the PUSCH is assigned because the PDCCH is transmitted from the remote device 260 to the user device 300, the user device 300 transmits the CQI to the remote device 260 via the PUSCH except at a predetermined location explained below.

On the other hand, as shown in FIG. 5(b), if the PUSCH has not been assigned, the user device 300 transmits the CQI to the remote device 260 via the PUCCH.

### (3.2) Reception of CQI via PUSCH

Reception of the CQI via the PUSCH is explained below. Specifically, a reception sequence of the CQI via the PUSCH and information required for the reception of the CQI are explained.

### (3.2.1) Reception sequence of CQI

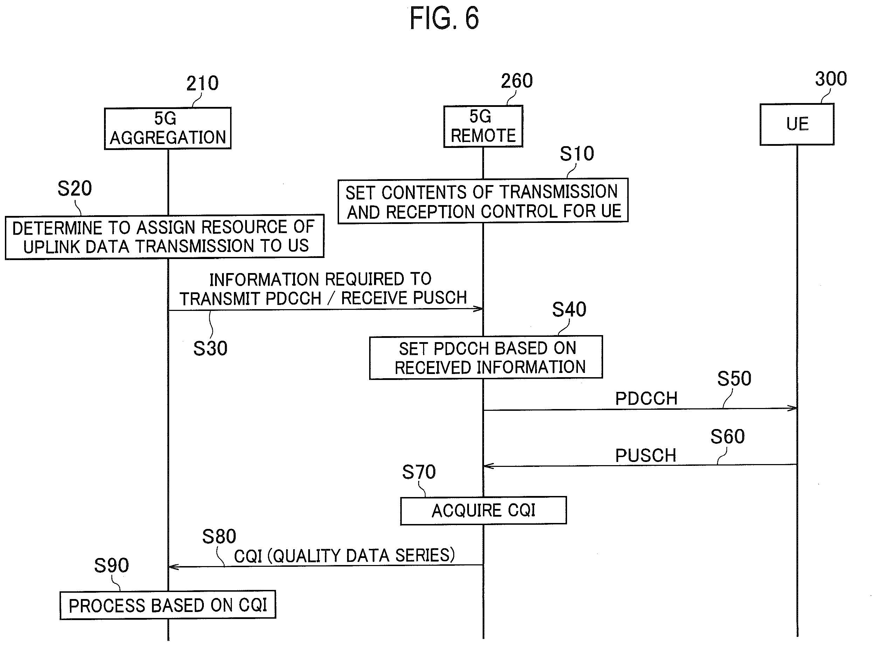

FIG. 6 shows the reception sequence of the CQI by the PUSCH. As shown in FIG. 6, the remote device 260 sets the contents of a transmission and reception control with respect to the user device 300 (S10). Specifically, the remote device 260 sets information to enable the transmission and reception control with respect to the user device 300 based on a control from the central aggregation device 210. Particularly, with respect to the reception of the CQI, the remote device 260 sets a transmission mode (Transmission mode), resource assignment information of the PUCCH used for the transmission of the CQI, a feedback mode of the CQI, and the like.

Subsequently, the central aggregation device 210 determines the radio resource for the uplink (PUSCH) to be assigned to the user device 300. Specifically, the central aggregation device 210 determines the number of resource blocks (RB), a transport block size (TBS), a modulation method, and the like (S20).

The central aggregation device 210 notifies the remote device 260 of information (including other accompanying information) about the downlink control physical channel (PDCCH (Physical Downlink Control Channel)) to be transmitted by the remote device 260 and information about the determined PUSCH (S30) .

The remote device 260 sets the PDCCH based on the information notified of from the central aggregation device 210 (S40) . Subsequently, the remote device 260 transmits the PDCCH to the user device 300 based on the setting (S50).

The user device 300 sets the PUSCH based on the received contents of the PDCCH and transmits the PUSCH to the remote device 260 (S60). The user device 300 transmits the PUSCH containing the CQI. Such operation is performed in each of the plurality of the user devices 300.

Specifically, when the CQI and the PUSCH are transmitted at the same timing, the user device 300 multiplexes the CQI to the PUSCH before transmitting. On the other hand, if the PUSCH has not been assigned at the transmission and reception timing of the CQI, the user device 300 transmits the CQI via a PUCCH set beforehand. The transmission of the CQI by the PUCCH will be explained later.

The remote device 260 acquires the CQI received from one or more user devices 300 via the PUSCH (S70) . If the CQIs are acquired from a plurality of the user devices 300 within predetermined period, the remote device 260 combines those CQIs, and generates a quality data series containing the information about those CQIs.

The remote device 260 transmits the acquired CQI, specifically, the quality data series, to the central aggregation device 210 (S80).

The central aggregation device 210 performs a predetermined process based on the received quality data series (S90). Specifically, the central aggregation device 210 performs the assignment and the like of the radio resource to the user device 300.

### (3.2.2) Information required for reception of CQI

When the remote device 260 receives the CQI via the PUSCH, that is, when the PUSCH has been assigned to the user device 300 at the timing at which the CQI is transmitted by the user device 300, the remote device 260 transmits UL Scheduling Grant of the PUSCH via the PDCCH. Therefore, the remote device 260 knows about the reception of the PUSCH and the reception of the CQI via the PUSCH.

When the timing of transmission of the ACK of the PDSCH and the timing of transmission of the CQI in the user device 300 coincide, the CQI is dropped without being transmitted at such a timing. Because the remote device 260 knows about the information of the PDSCH, the remote device 260 can detect that the CQI has been dropped.

Moreover, when the carrier aggregation (CA) is being performed, depending on the presence / absence of the transmission of the PUSCH by using the component carrier (CC) transmitted and received between the user device 300 and the plurality of the remote devices 260, a difference occurs in whether the CQI is transmitted by the PUSCH or the PUCCH.

In this respect, as mentioned above, the central aggregation device 210 transmits the UL Scheduling Grant (scheduling information of the uplink) in the other remote devices 260 to the plurality of the remote devices 260 that are connected to the central aggregation device 210. It is allowable for the central aggregation device 210 to transmit the scheduling information of the downlink in the other remote devices 260 to the plurality of the remote devices 260 connected to the central aggregation device 210.

When the PUSCH is transmitted in a secondary cell (Scell) and not a primary cell (Pcell), the CQI is transmitted via a PUSCH of the Scell. When the user device 300 receives the PDSCH in the Scell, because the ACK of the PDSCH is transmitted via the PUCCH, the CQI is dropped, that is, not transmitted.

Moreover, when the CA is being performed, depending on the presence or absence of transmission of the PDSCH by using the CC, a difference occurs in whether the CQI is dropped. Therefore, the central aggregation device 210 transmits the scheduling information of the downlink in the other remote devices 260 to the plurality of the remote devices 260 connected to the central aggregation device 210.

When transmitting the CQI via the PUSCH, Aperiodic CQI (asynchronous CQI transmission) trigger is possible for the user device 300 for the CQIs relating to the plurality of the CCs. Even in such a case, the remote device 260 knows that the trigger is possible from the UL Scheduling Grant.

Moreover, the remote device 260 retains the bit number, the transmission mode (Transmission mode) of the CQI, the multiplex mode (Duplex mode), information about whether it is the CA state as the information required for the reception of the CQI of the other user devices 300 as setting information per user device 300.

### (3.3) Reception of CQI via PUCCH

Reception of the CQI via the PUCCH is explained below. Specifically, a reception sequence of the CQI via the PUCCH and information required for the reception of the CQI are explained.

### (3.3.1) Reception sequence of CQI

The reception sequence in the case of the reception of the CQI via the PUCCH is extremely simple. As shown in FIG. 5(b), because the user device 300 transmits the CQI via the PUCCH, the remote device 260 periodically receives the PUCCH at a reception timing of the CQI set beforehand and attempts reception of the CQI.

Like the reception of the CQI via the PUSCH, if the CQIs are acquired from a plurality of the user devices 300 within predetermined period, the remote device 260 combines those CQIs, generates a quality data series containing the information about those CQIs, and transmits the generated quality data series to the central aggregation device 210.

### (3.3.2) Information required for reception of CQI

When the remote device 260 receives the CQI via the PUCCH, that is, when the PUSCH has not been set (not assigned) at the timing of transmission of the CQI, it is necessary that the remote device 260 knows a parameter about the radio resource per user device 300.

Therefore, the central aggregation device 210 notifies the remote device 260 of the parameter about the radio resource to each user device 300 beforehand.

### (3.4) Format of quality data series

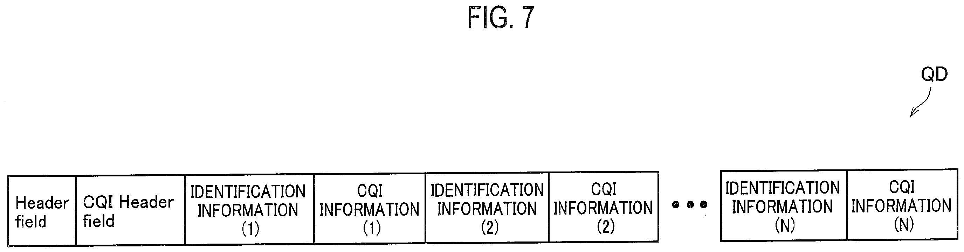

A format of the quality data series is explained below. FIG. 7 depicts an example of a format of a quality data series.

As shown in FIG. 7, a quality data series QD contains a header field, CQI header field, and a plurality of pairs of identification information and CQI information.

The "header field" is a region indicating a type of a signal that contains the quality data series QD. A different value is set in the header field depending on a type and the like of data included in the signal.

The "CQI header field" shows a configuration of the CQI information that follows, and can include the following items:
- Number of pieces of the identification information multiplexed as the quality data series QD
- Bit length of the quality data series QD (CQI).

It is not necessarily that the CQI header field includes both the above items. The number of pieces of the CQI information varies depending on a status (for example, the transmission mode, the rank (transmission layer) number, presence or absence of the carrier aggregation, presence or absence of the trigger of the Aperiodic CQI, and the like) of each user device 300.

Therefore, the bit number of the CQI information is specified per user device 300. It is allowable to secure a field that can accommodate the maximum estimated bit number thereby omitting the information of the bit length. Alternatively, a subheader that corresponds to the CQI information per user device 300 can be prepared and the bit length can be set in this subheader.

The "identification information" includes a user-device identifier for identifying the user device 300 that acquired the CQI information that follows, and any of the following can be used as the identification information:
- C-RNTI (Cell-Radio Network Temporary Identity)
   (e.g., SPS (Semi-Persistent Scheduling) C-RNTI and the like)
- S-TMSI ((SAE-Temporary Mobile Subscriber Identity) or IMSI International Mobile Subscriber Identity)
- PUCCH resource index (when the CQI is received via the PUCCH)
- CCE (Control Channel Element) index of UL Scheduling Grant (PDCCH) (when the CQI is received via the PUSCH)
- Identification information (e.g., an ID and the like used to identify a user device connected to a radio base station inside a device of the radio base station) in the implementation of the radio base station 200

When the carrier aggregation is being performed, it is possible that the same C-RNTI and the like are assigned to a plurality of the user devices 300. To address this issue, it is allowable to additionally include PCI (Physical Cell ID), ECGI (E-UTRAN Cell Global ID), a carrier frequency, a carrier number, and the like as the identification information to uniquely identify the user device 300.

The "CQI information" (including the PMI/RI) represents data of the CQI acquired from the user device 300. It is allowable to include in the quality data series QD the CQIs acquired from a plurality of the user devices 300. In the example shown in FIG. 7, the CQI information acquired from N units of the user devices 300, i.e., CQI information (1) to CQI information (N) is included in the quality data series QD.

With respect to the order of the CQI information, the contents (bit string) obtained by decoding the PUCCH or the PUSCH can be arranged in the same order or the order of particular information can be changed. Moreover, when the reliability of the signal that includes the received CQI information is low (e.g., this can be determined from an index such as SIR), information indicating that reception was not possible or information indicating reliability is low can be added as the CQI information.

When multiplexing a plurality of pieces of the CQI information, the required bit number of the quality data series QD can be reduced by transmitting only the CQI information bundled per particular group. Moreover, upon receiving the CQI corresponding to a plurality of codewords that are the unit of error correction coding, it is allowable to transmit only an average value or a high value of the CQI in the plurality of codewords. Similarly, upon receiving the CQI corresponding to a plurality of subbands, it is allowable to transmit only an average value of the CQI in the plurality of subbands or the CQI in a particular subband obtained by narrowing down.

Moreover, when the remote device 260 was transmitting the PDCCH (UL Scheduling Grant), the remote device 260 expects that the CQI is multiplexed in the PUSCH. However, if the user device 300 cannot receive the PDCCH, the user device 300 transmits the CQI via the PUCCH. To address this issue, it is allowable to add information that shows via which of the PUSCH and the PUCCH the CQI was received, that is, a channel position indicating a position in the PUCCH or the PUSCH, as the CQI information.

Furthermore, it is allowable that the quality data series QD contains reception timing (e.g., HFN (Hyper Frame Number), SFN (System Frame Number), a subframe number, and the like) of the PUSCH and / or the PUCCH corresponding to the CQI information. The information about the reception timing can be set in the "header field". Moreover, if the CQI information of a plurality of the subframes is to be notified of in a mass, a format in which there is a repetition in a subframe unit can be used.

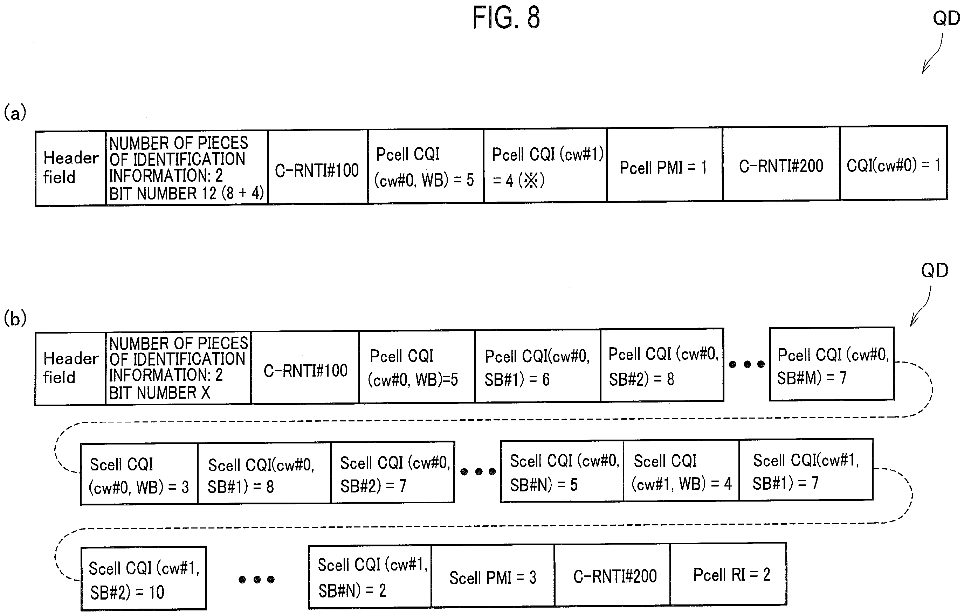

FIGS. 8(a) and 8(b) show concrete configuration examples of the quality data series QD. Specifically, FIG. 8(a) depicts a configuration example of the quality data series QD that contains the CQI information received from two user devices 300. FIG. 8(b) also depicts a configuration example of the quality data series QD that contains the CQI information received from two user devices 300; however, represents a case in which the carrier aggregation (CA) is performed in one of the user devices 300.

Moreover, in each configuration example of the quality data series QD shown in FIG. 8(a) and FIG. 8(b), the C-RNTI is used as the identification information of the user device 300. Specifically, these figures correspond to the CQI/PMI/RI acquired by a user device (UE) of the C-RNTI of #100 and UE of the C-RNTI of #200.

The states of the UE corresponding to the quality data series QD shown in FIG. 8(a) are as below:
* UE (C-RNTI #100): No-CA state
   - Pcell (TM4, Rank = 2, periodic CQI, CQI (cw#0) (wideband = 5), CQI(cw#1) (wideband = 4), PMI = 1)
* UE (C-RNTI #200): No-CA state
   - Pcell (TM3, Rank = 1, periodic CQI, CQI(codeword#0) = 1)

TM is an abbreviation of the transmission mode, and cw is an abbreviation of the codeword.

The states of the UE corresponding to the quality data series QD shown in FIG. 8(b) are as below:
* UE (C-RNTI #100): CA state (2CC)
   - Pcell (TM3, Rank = 1, Aperiodic CQI, CQI (cw#0) (wideband = 5, subband#1 = 6, subband#2 = 8, ..., subband#M = 7))
   - Scell (TM4, Rank = 2, Aperiodic CQI, CQI (cw#0) (wideband = 3, subband#1 = 8, subband#2 = 7, ..., subband#N = 5), CQI(cw#1) (wideband = 4, subband#1 = 7, subband#2 = 10, ..., subband#N = 2), PMI = 3)
* UE (C-RNTI #200): No-CA state
   - Pcell (TM3, Rank = 1, periodic CQI(RI), RI = 2)

As shown in FIGS. 8(a) and 8(b), the quality data series QD can contain the downlink quality information (CQI/PMI/RI) acquired by a plurality of the user devices (UE).

### (4) Effects and advantages

According to the present embodiment, the following effects and advantages can be obtained. Specifically, the remote device 260 includes the information transmitting unit 267 that transmits to the central aggregation device 210 the quality data series containing one or more pieces of the downlink quality information acquired by the quality information acquiring unit 265. Moreover, the central aggregation device 210 includes the radio resource assigning unit 215 that performs the assignment of the radio resource to the user device 300 based on the quality data series received by the information receiving unit 213.

Accordingly, even if the function of the upper layer such as the MAC scheduler and the function of the radio physical layer are mounted separately in the central aggregation device 210 and the remote device 260, the central aggregation device 210 can appropriately realize the assignment of the radio resource to the user device 300 based on the received downlink quality information, specifically, the CQI/PMI/RI.

Moreover, in the present embodiment, the remote device 260 (information transmitting unit 267) can transmit the quality data series containing the user-device identifier (C-RNTI and the like) for identifying the user device 300 and the downlink quality information. Therefore, the central aggregation device 210 can be notified of the downlink quality information of a plurality of the user devices 300 collectively, and the central aggregation device 210 can identify the user devices 300 by using the user-device identifiers. Accordingly, the transmission and reception of the quality data series can be realized effectively between the central aggregation device 210 and the remote device 260.

In the present embodiment, the remote device 260 (information transmitting unit 267) can transmit the quality data series containing the channel position indicating the position in the uplink channel (PUCCH or PUSCH) to which the user device 300 transmitted the downlink quality information. Accordingly, because the central aggregation device 210 can grasp the reception state of the downlink channel in the user device 300, an appropriate assignment of the radio resource depending on the state of the user device 300 can be realized.

Moreover, in the present embodiment, when it is confirmed that the TA timer is within a period of operation, the central aggregation device 210 (radio resource assigning unit 215) performs assignment of the radio resource to the user device 300 based on the received quality data series. Accordingly, when the TA timer has expired and the user device 300 is not transmitting the downlink quality information, the downlink quality information contained in the quality data series is decoded whereby the possibility that a wrong value is acquired can be prevented.

In the present embodiment, when the carrier aggregation is being performed, the central aggregation device 210 can transmit the scheduling information (UL Scheduling Grant) of the uplink in the other remote devices 260 to the plurality of the remote devices 260 that are connected to the central aggregation device 210. Therefore, the CQI of the user device 300 in the Pcell or the Scell can be acquired precisely and speedily when the carrier aggregation is being performed.

### (5) Other embodiments

The present invention has been explained in detail by using the above embodiments; however, it is self-evident to a person skilled in the art that the present invention is not limited to the embodiments explained herein and that the embodiments can be modified or improved in various ways.

For example, in the embodiments, the central aggregation device 210 monitors the operating state of the TA timer; however, the remote device 260 can instead monitor the operating state of the TA timer. In a configuration in which the remote device 260 monitors the operating state of the TA timer, the remote device 260 upon detecting expiration of a TA timer arranged corresponding to each of the user devices 300 stops the reception of the CQI from the corresponding user device 300. Moreover, the remote device 260 notifies the central aggregation device 210 of the expiration of the TA timer. Regarding the monitoring of the TA timer while the carrier aggregation is being performed, it is preferable that the central aggregation device 210 monitors the TA timer as, when done so, the CQIs associated with a plurality of the remote devices 260 can be managed unitarily.

Moreover, in the above embodiments, it is explained that the "CQI header field" of the quality data series QD (see FIG. 7) contains the number of pieces of the identification information multiplexed as the quality data series QD and the bit length of the quality data series QD (CQI); however, such an information is not necessarily essential. That is, one or more between the number of pieces of the multiplexed identification information and the bit length can be omitted from the "CQI header field". Furthermore, the "CQI header field" can be integrated with the "header field".

Moreover, in the above explanation, the user-device identifier such as the C-RNTI is included in the quality data series. However, if it is possible to acquire the user-device identifier of the user device 300 corresponding with the downlink quality information by any means other than the quality data series, the user-device identifier can be omitted from the quality data series.

Furthermore, though an explanation has been given in the above embodiments by using the terms prescribed in the 3GPP mainly, these terms can be replaced with some other terms. For example, as also mentioned in the above embodiments, the user device can be called a radio communication terminal, a mobile station, a user terminal, and the like. Moreover, the radio base station can be called a node, a radio communication device or system, and the like.

The sequences, flowcharts, and the like in the embodiments described above may be rearranged in order unless it causes a contradiction.

Note that the terms used in the descriptions of this specification and/or terms necessary to understand this specification may be replaced with terms having the same or similar meanings. For example, a channel and/or a symbol may be a signal, or a signal may be a message. In addition, the terms "system" and "network" may be used interchangeably.

Moreover, the above-described parameters and the like may be expressed by absolute values, by relative values from specified values, or by other associated information. For example, radio resources may be instructed by an index.

The radio base stations (the radio base stations 100 and 200, hereinafter referred as a base station) can accommodate one or more (for example, three) cells (also called sectors). When a base station has multiple cells, the entire coverage area of the base station can be divided into multiple smaller areas.

The term "cell" or "sector" means part or the whole of the coverage area provided by a base station and/or a subsystem of the base station that provide communication services in this coverage. Further, the terms "base station", "eNB", "cell", and "sector" can be used interchangeably in this specification. In some cases, a base station (BS) is also called terms such as a fixed station, a NodeB, an eNodeB (eNB), an access point, a femtocell, and a small cell.

The UE 300 is also called in some cases by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

"The expression "based on" used in this specification does not mean "based only on" unless explicitly stated otherwise. In other words, the expression "based on" means both "based only on" and "based at least on".

In addition, the terms "including", "comprising", and other variations thereof are intended to be comprehensive as with "comprise". Moreover, the term "or" used in this specification or the scope of claims is intended not to be exclusive disjunction.

Any reference of the elements using names such as "first", "second", and the like used in this specification does not limit the amount or the order of these elements in general. These names can be used in this specification as a convenient way of discriminating two or more elements. Thus, referring to a first element and a second element does not mean that only the two elements can be employed in the specification or that the first element should precede the second element in some form.

In the entirety of this specification, for example, when articles such as a, an, and the in English are added in translation, these articles also mean to include plurality as long as the context does not clearly indicate the singularity.

According to one aspect, in a radio base station (radio base station 200) including a remote device (remote device 260) and a central aggregation device (central aggregation device 210) and that performs radio communication with a user device (user device 300), the remote device includes a quality information acquiring unit (quality information acquiring unit 265) that acquires via a predetermined uplink channel (PUSCH or PUCCH) downlink quality information (CQI/PMI/RI) indicating radio communication quality in downlink acquired by the user device; and a quality information transmitting unit (information transmitting unit 267) that transmits to the central aggregation device a quality data series (quality data series QD) containing one or more pieces of the downlink quality information acquired by the quality information acquiring unit, and the central aggregation device includes an information receiving unit (information receiving unit 213) that receives the quality data series; and a radio resource assigning unit (radio resource assigning unit 215) that performs assignment of a radio resource to the user device based on the quality data series received by the information receiving unit.

In the above aspect, the quality information transmitting unit can transmit the quality data series containing a user-device identifier (for example, C-RNTI) for identifying the user device and the downlink quality information.

In the above aspect, the quality information transmitting unit can transmit the quality data series containing a channel position indicating a position in the uplink channel to which the user device transmitted the downlink quality information.

In the above aspect, the central aggregation device can include a timer monitoring unit (timer monitoring unit 217) that monitors an operating state of a timer that measures a period during which the user device transmits the downlink quality information, and the radio resource assigning unit can perform the assignment of the radio resource based on the quality data series when the timer monitoring unit confirms that the timer is within a period of operation.

In the above aspect, the central aggregation device includes a scheduling information transmitting unit (information transmitting unit 211) that transmits, when the user device performs carrier aggregation with a plurality of the remote devices by using a plurality of component carriers, to a plurality of the remote devices connected to the central aggregation device at least one of scheduling information of downlink in other remote device and scheduling information of uplink.

According to another aspect, a remote device included in a radio base station that performs radio communication with a user device, and connectable to a central aggregation device includes a quality information acquiring unit that acquires via a predetermined uplink channel downlink quality information indicating radio communication quality in downlink acquired by the user device; and a quality information transmitting unit that transmits to the central aggregation device a quality data series containing one or more pieces of the downlink quality information acquired by the quality information acquiring unit.

According to still another aspect, communication control method implemented in a radio base station including a remote device and a central aggregation device and that performs radio communication with a user device includes acquiring including the remote device acquiring via a predetermined uplink channel downlink quality information indicating radio communication quality in downlink acquired by the user device; transmitting including the remote device transmitting to the central aggregation device a quality data series containing one or more pieces of the downlink quality information acquired at the acquiring; and performing including the central aggregation device performing assignment of a radio resource to the user device based on the quality data series.

### INDUSTRIAL APPLICABILITY

According to the radio base station, the remote device, and the communication control method mentioned above, it is possible to realize appropriate assignment of the radio resource to the user device even when the function of the upper layer such as the MAC scheduler and the function of the radio physical layer are mounted separately.

### EXPLANATION OF REFERENCE NUMERALS

- 10: radio communication system
- 20: core network
- 100: radio base station
- 110: central aggregation device
- 160: remote device
- 200: radio base station
- 210: central aggregation device
- 211: information transmitting unit
- 213: information receiving unit
- 215: radio resource assigning unit
- 217: timer monitoring unit
- 219: scheduler function unit
- 260: remote device
- 261: radio communication unit
- 263: communication setting unit
- 265: quality information acquiring unit
- 267: information transmitting unit
- 269: information receiving unit
- 300: user device
- QD: quality data series

## Claims

1. A radio base station including a remote device (260) and a central aggregation device (210) and configured to perform radio communication with a user device, wherein
the remote device includes
a quality information acquiring unit (265) configured to acquire via a predetermined uplink channel downlink quality information indicating radio communication quality in downlink for each of multiple cells, acquired by the user device; and
a quality information transmitting unit (267) configured to transmit to the central aggregation device information about quality data containing one or more pieces of the downlink quality information acquired by the quality information acquiring unit and a user-device identifier for identifying the user device and the downlink quality information, and
the central aggregation device includes
an information receiving unit (213) configured to receive the information about quality data; and
a radio resource assigning unit (215) configured to perform assignment of a radio resource to the user device based on the information about quality data received by the information receiving unit.

2. The radio base station as claimed in Claim 1, wherein the quality information transmitting unit transmits the information about quality data containing a channel position indicating a position in the uplink channel to which the user device transmitted the downlink quality information.

3. The radio base station as claimed in Claim 1, wherein
the central aggregation device includes a timer monitoring unit that monitors an operating state of a timer that measures a period during which the user device transmits the downlink quality information, and
the radio resource assigning unit performs the assignment of the radio resource based on the information about quality data when the timer monitoring unit confirms that the timer is within a period of operation.

4. The radio base station as claimed in Claim 1, wherein the central aggregation device includes a scheduling information transmitting unit that transmits, when the user device performs carrier aggregation with a plurality of the remote devices by using a plurality of component carriers, to a plurality of the remote devices connected to the central aggregation device at least one of scheduling information of downlink in other remote device and scheduling information of uplink.

5. A communication control method implemented in a radio base station including a remote device (260) and a central aggregation device (210) and that performs radio communication with a user device, the communication control method comprising:
acquiring including the remote device acquiring via a predetermined uplink channel downlink quality information indicating radio communication quality in downlink for each of multiple cells , acquired by the user device;
transmitting, by the remote device, to the central aggregation device information about quality data containing one or more pieces of the downlink quality information acquired at the acquiring and user-device identifier for identifying the user device and the downlink quality information; and
performing including the central aggregation device performing assignment of a radio resource to the user device based on the information about quality data.

## Patentansprüche

1. Funkbasisstation, die eine entfernte Vorrichtung (260) und eine zentrale Aggregationsvorrichtung (210) einschließt und konfiguriert ist zum Durchführen von Funkkommunikation mit einer Benutzervorrichtung, wobei
die entfernte Vorrichtung Folgendes einschließt
eine Qualitätsinformationenerfassungseinheit (265), die konfiguriert ist zum Erfassen von Abwärtsstrecken-Qualitätsinformationen über einen vorbestimmten Aufwärtsstreckenkanal, die Abwärtsstrecken-Funkkommunikationsqualität für jede von mehreren Zellen angeben, die durch die Benutzervorrichtung erfasst werden; und
eine Qualitätsinformationensendeeinheit (267), die konfiguriert ist zum Senden von Informationen über Qualitätsdaten, die ein oder mehrere Teile der durch die Qualitätsinformationenerfassungseinheit erfassten Abwärtsstrecken-Qualitätsinformationen und einen Benutzervorrichtungsidentifikator zum Identifizieren der Benutzervorrichtung und der Abwärtsstrecken-Qualitätsinformationen enthalten, an die zentrale Aggregationsvorrichtung, und
die zentrale Aggregationsvorrichtung Folgendes einschließt
eine Informationenempfangseinheit (213), die konfiguriert ist zum Empfangen der Informationen über Qualitätsdaten; und
eine Funkressourcenzuweisungseinheit (215), die konfiguriert ist zum Durchführen einer Zuweisung einer Funkressource an die Benutzervorrichtung basierend auf den durch die Informationenempfangseinheit empfangenen Informationen über Qualitätsdaten.

2. Funkbasisstation nach Anspruch 1, wobei die Qualitätsinformationensendeeinheit die Informationen über Qualitätsdaten sendet, die eine Kanalposition enthalten, die eine Position in dem Aufwärtsstreckenkanal angibt, an den die Benutzervorrichtung die Abwärtsstrecken-Qualitätsinformationen gesendet hat.

3. Funkbasisstation nach Anspruch 1, wobei
die zentrale Aggregationsvorrichtung eine Zeitgeberüberwachungseinheit einschließt, die einen Betriebszustand eines Zeitgebers überwacht, der eine Periode misst, während der die Benutzervorrichtung die Abwärtsstrecken-Qualitätsinformationen sendet, und
die Funkressourcenzuweisungseinheit die Zuweisung der Funkressource basierend auf den Informationen über Qualitätsdaten durchführt, wenn die Zeitgeberüberwachungseinheit bestätigt, dass sich der Zeitgeber innerhalb einer Betriebsperiode befindet.

4. Funkbasisstation nach Anspruch 1, wobei die zentrale Aggregationsvorrichtung eine Planungsinformationensendeeinheit einschließt, die, wenn die Benutzervorrichtung eine Trägeraggregation mit einer Vielzahl der entfernten Vorrichtungen durch Verwenden einer Vielzahl von Komponententrägern durchführt, an eine Vielzahl der entfernten Vorrichtungen, die mit der zentralen Aggregationsvorrichtung verbunden ist, mindestens eines von Abwärtsstrecken-Planungsinformationen in einer anderen entfernten Vorrichtung und Aufwärtsstrecken-Planungsinformationen sendet.

5. Kommunikationssteuerungsverfahren, das in einer Funkbasisstation umgesetzt ist, die eine entfernte Vorrichtung (260) und eine zentrale Aggregationsvorrichtung (210) einschließt, und das Funkkommunikation mit einer Benutzervorrichtung durchführt, wobei das Kommunikationssteuerungsverfahren Folgendes umfasst:
Erfassen, was einschließt, dass die entfernte Vorrichtung Abwärtsstrecken-Qualitätsinformationen über einen vorbestimmten Aufwärtsstreckenkanal erfasst, die Abwärtsstrecken-Funkkommunikationsqualität für jede von mehreren Zellen angeben, die durch die Benutzervorrichtung erfasst werden;
Senden von Informationen über Qualitätsdaten, die ein oder mehrere Teile der beim Erfassen erfassten Abwärtsstrecken-Qualitätsinformationen und einen Benutzervorrichtungsidentifikator zum Identifizieren der Benutzervorrichtung und der Abwärtsstrecken-Qualitätsinformationen enthalten, durch die entfernte Vorrichtung an die zentrale Aggregationsvorrichtung; und
Durchführen, was einschließt, dass die zentrale Aggregationsvorrichtung eine Zuweisung einer Funkressource an die Benutzervorrichtung basierend auf den Informationen über Qualitätsdaten durchführt.

## Revendications

1. Station de base radio comportant un dispositif distant (260) et un dispositif (210) d'agrégation central et configurée pour mettre en oeuvre une communication radio avec un dispositif utilisateur, dans laquelle
le dispositif distant comporte
une unité (265) d'acquisition d'informations de qualité configurée pour acquérir, par l'intermédiaire d'un canal de liaison montante prédéterminé, des informations de qualité de liaison descendante indiquant une qualité de communication radio dans une liaison descendante pour chacune de multiples cellules, acquises par le dispositif utilisateur ; et
une unité (267) de transmission d'informations de qualité configurée pour transmettre au dispositif d'agrégation central des informations sur des données de qualité contenant une ou plusieurs des informations de qualité de liaison descendante acquises par l'unité d'acquisition d'informations de qualité et un identifiant de dispositif utilisateur pour identifier le dispositif utilisateur et les informations de qualité de liaison descendante, et
le dispositif d'agrégation central comporte
une unité (213) de réception d'informations configurée pour recevoir les informations sur des données de qualité ; et
une unité (215) d'attribution de ressource radio configurée pour réaliser une attribution d'une ressource radio au dispositif utilisateur sur la base des informations sur les données de qualité reçues par l'unité de réception d'informations.

2. Station de base radio selon la revendication 1, dans laquelle l'unité de transmission d'informations de qualité transmet les informations sur des données de qualité contenant une position de canal indiquant une position dans le canal de liaison montante auquel le dispositif utilisateur a transmis les informations de qualité de liaison descendante.

3. Station de base radio selon la revendication 1, dans laquelle
le dispositif d'agrégation central comporte une unité de surveillance de minuterie qui surveille un état de fonctionnement d'une minuterie qui mesure une période durant laquelle le dispositif utilisateur transmet les informations de qualité de liaison descendante, et
l'unité d'attribution de ressource radio réalise l'attribution de la ressource radio sur la base des informations sur des données de qualité lorsque l'unité de surveillance de minuterie confirme que la minuterie est à l'intérieur d'une période de fonctionnement.

4. Station de base radio selon la revendication 1, dans laquelle le dispositif d'agrégation central comporte une unité de transmission d'informations de planification qui transmet, lorsque le dispositif utilisateur réalise une agrégation de porteuses avec une pluralité des dispositifs distants en utilisant une pluralité de porteuses composantes, à une pluralité des dispositifs distants connectés au dispositif d'agrégation central, au moins une parmi des informations de planification de liaison descendante dans un autre dispositif distant et des informations de planification de liaison montante.

5. Procédé de commande de communication mis en oeuvre dans une station de base radio comportant un dispositif distant (260) et un dispositif (210) d'agrégation central et qui réalise une communication radio avec un dispositif utilisateur, le procédé de commande de communication comprenant :
une acquisition incluant le dispositif distant acquérant, par l'intermédiaire d'un canal de liaison montante prédéterminé, des informations de qualité de liaison descendante indiquant une qualité de communication radio dans une liaison descendante pour chacune de multiples cellules, acquises par le dispositif utilisateur ;
la transmission, par le dispositif distant, au dispositif d'agrégation central, d'informations sur des données de qualité contenant une ou plusieurs des informations de qualité de liaison descendante acquises au moment de l'acquisition et un identifiant de dispositif utilisateur pour identifier le dispositif utilisateur et les informations de qualité de liaison descendante ; et
une mise en oeuvre comportant le dispositif d'agrégation central mettant en oeuvre l'attribution d'une ressource radio au dispositif utilisateur sur la base des informations sur des données de qualité.
